(19) Europäisches Patentamt
European Patent Office
Office européen des brevets

(11) Veröffentlichungsnummer: **0 303 078**
**A2**

(12) # EUROPÄISCHE PATENTANMELDUNG

(21) Anmeldenummer: **88111669.3**

(22) Anmeldetag: **20.07.88**

(51) Int. Cl.4: **C08L 67/00 , C08L 51/08 , //(C08L67/00,51:08), (C08L51/08,67:00)**

(30) Priorität: **01.08.87 DE 3725576**

(43) Veröffentlichungstag der Anmeldung: **15.02.89 Patentblatt 89/07**

(84) Benannte Vertragsstaaten: **DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Wittmann, Dieter, Dr.**
**Doerperhofstrasse 15**
**D-4150 Krefeld(DE)**
Erfinder: **Kress, Hans-JürgenDr. Dc/o Mobay Corporation**
**Plastics and Rubber Division Mobay Road**
**Pittsburgh, PA 15205(US)**
Erfinder: **Bottenbruch, Ludwig, Dr.**
**Woehlerstrasse 5**
**D-4150 Krefeld(DE)**
Erfinder: **Leitz, Edgar, Dr.**
**Goethestrasse 63**
**D-4047 Dormagen(DE)**
Erfinder: **Peters, Horst, Dr.**
**Winterberg 25**
**D-5090 Leverkusen 3(DE)**
Erfinder: **Ott, Karl-Heinz, Dr.**
**Paul-Klee-Strasse 54**
**D-5090 Leverkusen(DE)**

(54) **Formmassen aus aromatischem Polyester und gepfropftem Siliconkautschuk.**

(57) Formmassen aus voll-aromatischem Polyester und gepfropftem Siliconkautschuk definierter Zusammensetzung lassen sich zu Formkörpern mit ausgezeichneter Tieftemperaturzähigkeit und gleichmäßiger Oberfläche verarbeiten.

EP 0 303 078 A2

## Formmassen aus aromatischem Polyester und gepfropftem Siliconkautschuk

Die Erfindung betrifft thermoplastische Formmassen auf Basis von voll-aromatischem Polyester und gepfropftem Siliconkautschuk, ein Verfahren zu ihrer Herstellung durch Mischen der Komponenten bei erhöhter Temperatur und ihre Verwendung zur Herstellung von Formkörpern, vornehmlich durch Spritzguß.

"Voll-aromatische Polyester" im Sinne der Erfindung umfassen auch voll-aromatische Polyestercarbonate.

Man hat bereits Formmassen auf Basis voll-aromatischer Polyester vorgeschlagen, die zur Verbesserung der Schlagzähigkeit verschiedene Zusätze, vorzugsweise Polyolefine, Dien- und Acrylatkautschuke oder Styrolpolymerisate enthalten (EP-A 0 119 311). Während Dienkautschuke aufgrund ihrer bekannten Empfindlichkeit gegen thermischen und oxidativen Angriff für einige Verwendungen solcher Formmassen unbrauchbar sind, verleihen Polyolefine, Acrylatkautschuke und Styrolpolymerisate den Formmassen nicht die gewünschte befriedigende Schlagzähigkeit, insbesondere bei tiefen Temperaturen.

Siliconkautschuke zeichnen sich bekanntlich durch hohe Schlagzähigkeit auch bei Kälte aus (DE-OS 25 39 572). Die Erfindung zeigt jedoch, daß Mischungen aus vollaromatischem Polyester und üblichem Siliconkautschuk Formkörper mit ungleichmäßiger Oberfläche ergeben.

Überraschenderweise wurde nun gefunden, daß sich Mischungen aus voll-aromatischem Polyester und Siliconkautschuk zu Formkörpern mit guter Tieftemperaturzähigkeit und verbesserter Oberflächenqualität verarbeiten lassen, wenn man spezielle gepfropfte Siliconkautschuke verwendet.

Gegenstand der Erfindung sind thermoplastische Formmassen auf Basis von

A. 5 bis 99, vorzugsweise 40 bis 98, insbesondere 60 bis 97, Gew.-%, bezogen auf die Summe A + B, voll-aromatischem Polyester und

B. 1 bis 95, vorzugsweise 2 bis 60, insbesondere 3 bis 40, Gew.-%,. bezogen auf die Summe A + B, Pfropfpolymerisat aus

B.1 5 bis 90, vorzugsweise 30 bis 80, Gewichtsteilen einer Mischung aus

B.1.1 50 bis 95 Gewichtsteilen Styrol, α-Methylstyrol, Halogen- oder Methyl-kernsubstituierte Styrole, Methylmethacrylat oder Mischungen dieser Verbindungen und

B.1.2 5 bis 50 Gewichtsteilen Acrylnitril, Methacrylnitril, Methylmethacrylat, Maleinsäureanhydrid, $C_1$-$C_4$-Alkyl- bzw. Phenyl-N-substituierte Maleinimide oder Mischungen dieser Verbindungen auf

B.2 10 bis 95, vorzugsweise 20 bis 70, Gewichtsteile Siliconkautschuk mit einem mittleren Teilchendurchmesser $d_{50}$ von 0.09 bis 1, vorzugsweise 0.09 bis 0.4, µm und einem Gelgehalt von mehr als 50, vorzugsweise mehr als 70, insbesondere 73 bis 98, Gew.-%, bezogen auf B.2, erhältlich aus

a) Dihalogendiorganosilan,

b) 0 bis 10 Mol-%, bezogen auf a), Trihalogenorganosilan,

c) 0 bis 3 Mol-%, bezogen auf a), Tetrahalogensilan und

d) 0 bis 0,5 Mol-%, bezogen auf a), Halogentriorganosilan, wobei die Organylreste der Verbindungen a), b) und d)

α) $C_1$-$C_6$-Alkyl oder Cyclohexyl, vorzugsweise Methyl, Ethyl,

β) $C_6$-$C_{12}$-Aryl, vorzugsweise Phenyl,

γ) $C_1$-$C_6$-Alkenyl, vorzugsweise Vinyl, Allyl,

δ) Mercapto-$C_1$-$C_6$-alkyl, vorzugsweise Mercaptopropyl, bedeuten können mit der Maßgabe, daß die Summe (γ + δ) 2 bis 10 Mol-%, bezogen auf alle Organylreste der Verbindungen a), b) und d), und das Molverhältnis γ:δ (3:1) bis (1:3), vorzugsweise (2:1) bis (1:2), betragen.

Voll-aromatische Polyester A im Sinne der Erfindung sind aromatische Polyester und aromatische Polyestercarbonate, die überwiegend bis ausschließlich aus aromatischen $C_8$ - $C_{14}$-Dicarbonsäuren, $C_6$-$C_{30}$-Diphenolen und gegebenenfalls Kohlensäurederivaten z.B. Phosgen, aufgebaut sind.

Bevorzugte aromatische Dicarbonsäuren sind beispielsweise: Isophthalsäure, Terephthalsäure, Diphenylether-4,4′-dicarbonsäure, Naphthalin-2,6-dicarbonsäure. Besonders bevorzugt sind Iso- und Terphthalsäure. Bevorzugtes Kohlensäurederivat ist Phosgen.

Bevorzugte Diphenole für die Herstellung der voll-aromatischen Polyester A sind Verbindungen der Formel:

$$HO - Z - OH \qquad (I)$$

worin Z einen zweiwertigen ein- oder mehrkernigen aromatischen Rest mit 6 - 30 C-Atomen bedeutet,

wobei Z derart gebaut ist, daß die beiden OH-Gruppen direkt an je ein C-Atom eines aromatischen Systems gebunden sind.

Besonders bevorzugte Diphenole sind Verbindungen der Formel II

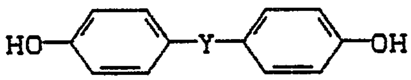

(II)

in der

Y eine Einfachbindung, einen Alkylen- oder Alkylidenrest mit 1 - 7 C-Atomen, einen Cycloalkylen- oder Cycloalkylidenrest mit 5 - 12 C-Atomen, -O-, -S-, $-\underset{\underset{O}{\|}}{S}-$

, $-SO_2$ oder $-\underset{\underset{O}{\|}}{C}-$

bedeutet,

sowie deren kernalkylierte und kernhalogenierte Derivate, z.B.

Hydrochinon,

Resorcin,

Dihydroxydiphenyle,

Bis-(hydroxyphenyl)-alkane,

Bis-(hydroxyphenyl)-cycloalkane,

Bis-(hydroxyphenyl)-ether,

Bis-(hydroxyphenyl)-ketone,

Bis-(hydroxyphenyl)-sulfoxide,

Bis-(hydroxyphenyl)-sulfone und

$\alpha,\alpha'$-Bis-(hydroxyphenyl)-dissopropylbenzole,

sowie deren kernalkylierte und kernhalogenierte Derivate.

Die wichtigsten Diphenole sind: Bisphenol A, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenylsulfon, sowie deren di- und tetrahalogenierte Derivate. Besonders bevorzugt ist Bisphenol A. Es können auch beliebige Mischungen der genannten Diphenole verwendet werden.

Mögliche Verzweigungsmittel sind in den DE-OS 2 940 024 und 3 007 934 genannt.

Als Kettenabbrecher für die voll-aromatischem Polyester A werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säuredichloride) verwendet. Weiterhin kommen die Chloride von aliphatischen Monocarbonsäuren mit bis zu 22 C-Atomen in Betracht.

Am Aufbau der voll-aromatischen Polyester A können auch bis jeweils 30 Mol-% der Dicarbonsäuren und Dihydroxyverbindungen aliphatische Baugruppen, z.B. Adipinsäure, Butandiol-1,4, beteiligt sein.

Weiterhin können die voll-aromatischen Polyester A teilweise aus aromatischen Hydroxycarbonsäure, z.B. p-Hydroxy-benzoesäure aufgebaut sein. Der Anteil solcher Hydroxycarbonsäuren kann bis zu 100 Mol-% (bezogen auf Bisphenol) betragen.

Falls Iso- und Terphthalsäure gemeinsam am Aufbau der voll-aromatischen Polyester A beteiligt sind, kann deren Verhältnis 1:20 bis 20:1 betragen.

Die voll-aromatischen Polyestercarbonate können vorzugsweise bis zu 99 Mol-%, insbesondere bis zu 80 Mol-%, besonders bevorzugt bis zu 50 Mol-%, Carbonatgruppen, bezogen auf die Summe von Ester- und Carbonatgruppen, enthalten.

Sowohl der Ester- als durch der Carbonanteil der vollaromatischen Polyestercarbonate A kann in Form von Blöcken oder statistisch verteilt im Polykondensat vorliegen.

Ein gewünschter Carbonatgruppengehalt kann auch durch Mischen von voll-aromatischem Polyester mit aromatischen Polycarbonat eingestellt werden.

Die Herstellung der voll-aromatischen Polyester A ist bekannt und z.B. in den DE-OS 1 495 626, 2 232 877, 2 703 376, 3 000 610, 2 714 544, 2 940 024, 3 007 934 beschrieben. Besonders bevorzugt ist das Phasengrenzflächenverfahren.

Die relative Lösungsviskosität ($\eta$ rel) der vollaromatischen Polyester A liegt im Bereich 1,18 bis 1,4,

vorzugsweise 1,22 bis 1,3 (gemessen an Lösungen von 0,5 g Polyester A in 100 ml $CH_2Cl_2$-Lösung bei 25° C).

Bevorzugte Siliconkautschuke B2 sind solche, deren Organylreste zu mindestens 80 Mol-% aus Methylgruppen bestehen.

Als Endgruppe fungiert im allgemeien eine Diorganylhydroxyl-siloxy-Einheit, vorzugsweise eine Dimethylhydroxylsiloxy-Einheit

Für die Herstellung der Siliconkautschuke B2 bevorzugte Silane a) bis d) enthalten als Halogensubstituenten vorzugsweise Chlor.

"Erhältlich" im Sinne der Erfindung bedeutet, daß der Siliconkautschuk B2 nicht unbedingt aus den Halogenverbindungen a) bis d) hergestellt werden muß. Die Definition umfaßt vielmehr auch Siliconkautschuke B2 gleicher Struktur, die aus Silanen mit anderen hydrolysierbaren Gruppen, wie z.B. $C_1$-$C_6$-Alkoxygruppen, hergestellt worden sind.

Die Siliconkautschuke B2 sind teilchenförmig. Der mittlere Teilchendurchmesser $d_{50}$ ist der Durchmesser, oberhalb und unterhalb dessen jeweils 50 Gew.-% der Teilohen liegen. Er kann mittels Ultrazentrifugen-Messungen (W. Scholtan, H. Lange, Kolloid. Z. und Z. Polymere 250 (1972), 782-796 bestimmt werden.

Der Gelgehalt wird bei 25° C in Aceton bestimmt; vgl. DE-PS 2 421 288, Sp. 7, Z. 17 - 37.

Bei der Herstellung der Pfropfpolymerisate B durch Pfropfcopolymerisation bilden sich im allgemeinen neben dem eigentlichen Pfropfcopolymerisat in bestimmten Ausmaß auch freie Polymerisate bzw. Copolymerisate der die Propfhülle bildenden Pfropfmonomeren.

Propfpolymerisate B im Sinne der Erfindung sind deshalb durch Polymerisation der Pfropfmonomeren B.1 in Gegenwart des Siliconkautschuks B.2 erhaltene Produkte, genau genommen also im allgemeien ein Gemisch aus Pfropfcopolymerisat und freiem (Co-) Polymerisat der Pfropfmonomeren B.1.

Die erfindungsgemäßen Formmassen weisen optimale Eigenschaften auf, wenn die Menge an freiem (Co-) polymerisat 50, vorzugsweise 30, insbesondere 20 Gew.-%, bezogen auf Komponente B, nicht übersteigt.

Die Pfropfpolymerisate B können durch radikalische Pfropfpolymerisation, beispielsweise analog DE-PS 24 21 288, hergestellt werden, z.B. nach folgendem Verfahren:

Zunächst wird in einer ersten Stufe durch Emulsionspolymerisation eines Siliconoligomeren der Siliconkautschuk B.2 hergestellt.

Die Herstellung einer Emulsion eins langkettigen OH-terminierten Siliconöls durch Emulsionspolymerisation ist dem Fachmann im Prinzip geläufig. Beispielhaft wird hierzu auf die US-PS 2 891 910 sowie auf die GB-PS 1 024 24 verwiesen. Besonders bevorzugt ist das in der britischen Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert.

Dementsprechend kann die Emulgatorkonzentration gering gehalten werden, und man hat nach Fertigstellung der Emulsion wenig störende Fremdmoleküle aus dem Katalysator in dem fertigem Produkt. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätzlich Co-Emulgatoren einzusetzen.

Derartige Co-Emulgatoren können nichtionischer sowie anionischer Natur sein. Als anionische Co-Emulgatoren kommen insbesondere Salze der obengenannten p-Alkyl-oder Alkylbenzolsulfonsäuren in Frage. Nichtionogene Co-Emulgatoren sind Polyoxyethylenderivate von Fettalkohole und Fettsäuren. Beispiele für derartige Emulgiermittel sind POE (3)-Laurylalkohol, POE (20)-Oleylalkohol, POE (7)-Nonylphenol oder POE (10)-Stearat (die Schreibweise POE (X)-Laurylalkohol bedeutet, daß an ein Molekül Laurylalkohol X Einheiten Ethylenoxid addiert worden sind, wobei die Zahl X einen Mittelwert darstellt).

Im allgemeinen sind Siliconöle, die durch Emulsionspolymerisation in Anwesenheit von nichtionogenen C-Emulgatoren entstanden sind, von niedrigerem Molekulargewicht als solche, bei denen kein Co-Emulgator verwendet wurde. Eine Steuerung des Molekulargewichts des bei der Emulsionspolymerisation entstehenden OH-terminierten Siliconöls erfolgt z.B. über die Temperatur bei der Gleichgewichtsbildung zwischen Siloxan, Wasser und dem durch Ringöffnung des Siloxans zunächst gebildeten Silanols (bezüglich Einzelheiten zum Zusammenhang zwischen Temperatur und Molekulargewicht wird auf die Arbeit von D. R. Weyenberg et al., J. Polym. Sci., Part C, 27, S. 28 -34 (1969) verwiesen).

Gruppen $\gamma$ und $\delta$ können in das Siliconpolymer durch Arbeiten in Anwesenheit geeigneter Siloxanoligomerer eingefügt werden. Geeignete Ausgangsoligomere sind z.B. Tetramethyltetravinylcyclotetrasiloxan oder $\gamma$-Mercaptopropylmethyldimethoxysilan oder dessen Hydrolysat.

Diese funktionellen Oligomeren werden dem Hauptoligomer, z.B. Octamethylcyclotetrasiloxan, in den gewünschten Mengen beigefügt.

Analog kann auch der Einbau längerkettiger Alkylreste, wie z.B. Ethyl, Propyl oder dgl. bzw. der Einbau

von Phenylgruppen erreicht werden.

Eine ausreichende Vernetzung des Siliconkautschuks kann schon erreicht werden, wenn die Reste $\gamma$ und $\delta$ bei der Emulsionspolymerisation miteinander reagieren, so daß die Zugabe eines externen Vernetzers entbehrlich sein kann. Jedoch kann ein Vernetzung bewirkendes Silan zugefügt werden, um den Vernetzungsgrad des Siliconkautschukes zu erhöhen.

Verzweigungen oder Vernetzungen können durch Zugabe von z.B. Tetraethoxysilan oder eines Silans der allgemeinen Formel Organyl-$SiX_3$, wobei X eine hydrolysierbar Gruppe, insbesondere den Alkoxyrest, darstellt, erzielt werden. Insbesondere bevorzugt sind neben Tetraethoxysilan Methyltrimethoxysilan oder Phenyltrimethoxysilan.

Zur Herstellung des Pfropfcopolymerisates B. können die Pfropfmonomeren B.1.1 und B.1.2 in Anwesenheit des Siliconkautschuks radikalisch pfropfpolymerisiert werden insbesondere bei 40 bis 90 °C. Die Pfropfpolymerisation kann in Suspension, Dispersion oder Emulsion durchgeführt werden. Bevorzugt ist die kontinuierliche oder diskontinuierliche Emulsionspropfpolymerisation. Diese Pfropfpolymerisation wird unter Einsatz von Radikalinitiatoren durchgeführt (aus der Gruppe der Peroxide, Azoverbindungen, Hydroperoxide, Persulfate, Perphosphate) sowie auch gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Monomeren B.1 wird an den Siliconkautschuk B.2 chemisch gebunden. Dieser besondere Silikonkautschuk B.2 macht besondere Maßnahmen (die eine hohe Pfropfung ermöglichen) überflüssig.

Die so hergestellten Pfropfpolymerisate B können nach bekannten Verfahren aufgearbeitet werden, z.B. durch Koagulation der Latices mit Elektrolyten (Salzen, Säuren oder Gemischen davon) und anschließende Reinigung und Trocknung.

Die erfindungsgemäßen Formmassen können weitere, für aromatische Polyester sowie Pfropfpolymerisate bekannte Zusätze, wie Stabilisatoren, Pigmente, Entformungsmittel Flammschutzmittel und Antistatika, in den Üblichen Mengen enthalten.

Die erfindungsgemäßen Formmassen können hergestellt werden, indem man die Bestandteile in bekannter Weise vermischt und bei erhöhten Temperaturen, vorzugsweise bei 250 bis 350 °C, in üblichen Vorrichtungen, wie Innenknetern, Extrudern oder Doppelwellenschnecken, schmelzcompoundiert oder schmelzextrudiert. Die einzelne Komponenten können nacheinander oder gleichzeitig gemischt werden.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörpern jeder Art z.B. durch Spritzgießen verwendet werden. Beispiele für Formkörper sind: Gehäuseteile (z.B. für Haushaltsgeräte, wie Saftpressen, Kaffeemaschinen, Mixer), Abdeckplatten für das Baugewerbe, Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

## Beispiele

Angegebene Teile bedeuten Gewichtsteile.

### A. Voll-aromatisches Polyestercarbonat

Polyestercarbonat mit einem Esteranteil von 50 Mol-% auf Basis von Bisphenol-A, Iso- und Terephthalsäure (1:1) mit 3 Mol-%, bezogen auf Bisphenol-A-Einheiten, p-Isooctylphenyl-Endgruppen, mit einer relativen Viskosität $\eta_{rel}$ von 1,30 (gemessen an einer Lösung von 0,5 g Polyestercarbonat in 100 ml $CH_2Cl_2$ bei 25 °C).

B. Pfropfpolymerisat

1. Herstellung der Siliconkautschuk-Emulsion (B.2)

38,4 Teile Octamethylcyclotetrasiloxan, 1,2 Teile Tetramethyltetravinylcyclotetrasiloxan und 1 Teile γ-Mercaptopropylmethyldimethoxysiloxan werden miteinander verrührt. 0,5 Teile Dodecylbenzolsulfonsäure werden zugefügt, anschließend 58,4 Teile Wasser innerhalb 1 Stunde zugegeben. Dabei wird intensiv gerührt. Die Voremulsion wird mit Hilfe einer Hochdruckemulgiermaschine 2 mal bei 200 bar homogenisiert. Man gibt weitere 0,5 Teile Dodecylbenzolsulfonsäure hinzu. Die Emulsion wird 2 Stunden bei 85 °C und anschließend 36 Stunden bei 20 °C gerührt. Neutralisiert wird mit Hilfe von 5 n-NaOH. Es resultiert eine stabile Emulsion mit einem Feststoffgehalt von ca. 36 Gew.-%. Das Polymer besitzt einen Gelgehalt von 82 Gew.-%, gemessen in Toluol; die mittlere Teilchengröße beträgt 300 nm.

2. Herstellung der Pfropfpolymerisate B

In einem Reaktor werden vorgelegt:
2107 Teile Latex B.2 und
1073 Teile Wasser
Nach Initiierung mittels einer Lösung von 7,5 Teilen Kaliumperoxydisulfat in 195 Teilen Wasser bei 65 °C werde folgende Lösungen in den Reaktor innerhalb von 4 Stunden gleichmäßig eingespeist:

Lösung 1:

540 Teile Syrol und
210 Teile Acrylnitril;

Lösung 2:

375 Teile Wasser und
15 Teile Natriumsalz von $C_{14}$-$C_{18}$-Alkylsulfonsäuren.

Anschließend wird innerhalb von 6 Stunden bei 65 °C auspolymerisiert. Es resultiert ein Latex mit einem Feststoffgehalt von ca. 33 Gew.-%.

Nach Koagulation mit einer wäßrigen Magnesium-chlorid/Essigsäure-Lösung, Filtration und Trocknung im Vakuum wird das Pfropfpolymerisat in Form eines weißen Pulvers erhalten.

Herstellung und Prüfung der erfindungsgemäßen Formmassen

Die Komponenten A. und B. wurden auf einem kontinuierlich arbeitenden Doppelwellenextruder aufgeschmolzen und homogenisiert (Massetemperatur 295 °C). Der Schmelzstrang wurde vor dem Austritt aus der Düse entgast, granuliert und getrocknet.

Von den Formmassen wurden auf einer Spritzgußmaschine Stäbe der Abmessung 2,5 x 0.5 x 0,125 Zoll hergestellt, an denen die Kerbschlagzähigkeit (nach Methode Izod) gemäß ASTM-D-256 bei Raumtemperatur, -20 °C, -40 °C und -50 °C gemessen wurde.

Daraus wurde der Zäh-Spröd-Übergang bestimmt, d. h. jener Temperaturbereich, in dem die ersten Sprödbrüche auftreten.

Wie nachfolgende Tabelle zeigt, wurden Formkörper erhalten, die eine ausgezeichnete Tieftemperaturzähigkeit besitzen. Sämtliche Probekörper besaßen vollkommen gleichmäßige Oberflächen.

Zusammensetzung und Eigenschaften der Formmassen

| Komponenten | | | |
|---|---|---|---|
| Beispiel | A [Gew.-%] | Propfpolymerisat B [Gew.-%] | Zäh-Spröd-Übergang (°C) |
| 1 . | 90 | 10 | -20 / -30 |
| 2 | 85 | 15 | -40 / -50 |

## Ansprüche

1. Thermoplastische Formmassen auf Basis von
A. 5 bis 99 Gew.-%, bezogen auf die Summe A + B., voll-aromatischem Polyester und
B. 1 bis 95 Gew.-%. bezogen auf die Summe A + B, Pfropfpolymerisat aus
B.1 5 bis 90 Gewichtsteilen einer Mischung aus
B.1.1 50 bis 95 Gewichtsteilen Styrol, α-Methylstyrol Halogen- oder Methyl-kernsubstituierte Styrole, Methylmethacrylat oder Mischungen dieser Verbindungen und
B.1.2 5 bis 50 Gewichtsteilen Acrylnitril, Methacrylnitril, Methylmethacrylat, Maleinsäureanhydrid, $C_1$-$C_4$-Alkyl- bzw. Phenyl-N-substituierte Maleinimide oder Mischungen dieser Verbindungen auf
B.2 10 bis 95 Gewichtsteile Siliconkautschuk mit einem mittleren Teilchendurchmesser $d_{50}$ von 0.09 bi 1 µm und einem Gelgehalt von mehr als 50 Gew.-%, bezogen auf B.2, erhältlich aus
a) Dihalogendiorganosilan,
b) 0 bis 10 Mol-%, bezogen auf a), Trihalogenorganosilan,
c) 0 bis 3 Mol-%, bezogen auf a), Tetrahalogensilan und
d) 0 bis 0.5 Mol-%, bezogen auf a), Halogentriorganosilan,
wobei die Organylreste der Verbindungen a), b) und d)
α) $C_1$-$C_6$-Alkyl oder Cyclohexyl,
β) $C_6$-$C_{12}$-Aryl,
γ) $C_1$-$C_6$-Alkenyl,
δ) Mercapto-$C_1$-$C_6$-alkyl
bedeuten können mit der Maßgabe, daß die Summe (γ + δ) 2 bis 10 Mol-%, bezogen auf alle Organylreste der Verbindungen a), b) und d), und das Molverhältnis γ:δ (3:1) bis (1:3) betragen.

2. Formmassen nach Anspruch 1 auf Basis von 40 bis 98 Gew.-% Komponente A und 2 bis 60 Gew.-% Komponente B.

3. Formmassen nach Anspruch 1 auf Basis von 60 bis 97 Gew.-% Komponente A und 3 bis 40 Gew.-% Komponente B.

4. Formmassen nach Ansprüchen 1 - 3, worin das Pfropfpolymerisat B aus 30 bis 80 Gewichtsteilen Pfropfmonomeren B.1 und 20 bis 70 Gewichtsteilen Siliconkautschuk B.2 hergestellt ist.

5. Formmassen nach Ansprüchen 1 - 4, worin der Teilchendurchmesser $d_{50}$ des Siliconkautschuks B.2 0.09 bis 0.4 µm beträgt.

6. Formassen nach Ansprüchen 1 - 5, worin der Gelgehalt des Siliconkautschuks B.2 mehr als 70 Gew.-% beträgt.

7. Formassen nach Ansprüchen 1 - 5, worin der Gelgehalt des Siliconkautschuks B.2 73 bis 98 Gew.-% beträgt.

8. Formmassen nach Ansprüchen 1 - 7, worin mindestens 80 Mol-% der Organylreste der Komponenten a), b) und d) Methylgruppen sind, die Reste γ Vinyl-und/oder Allylgruppen und die Reste δ Mercaptopropylreste sind.

9. Verfahren zur Herstellung der Formmassen nach Ansprüchen 1 - 8 durch Mischen der Komponenten bei erhöhter Temperatur.

10. Verwendung der Formmassen nach Ansprüchen 1-8 zur Herstellung von Formkörpern.